# EUROPÄISCHE PATENTSCHRIFT

(11) **EP 2 132 071 B1**
(45) Veröffentlichungstag und Bekanntmachung des Hinweises auf die Patenterteilung: **04.08.2010**
(21) Anmeldenummer: 08716591.6
(22) Anmeldetag: 18.03.2008
(51) Int. Cl.: B60T 17/08

(54) **KOMPAKT-KOMBIBREMSZYLINDER**
COMPACT COMBINED BRAKE CYLINDER
CYLINDRE DE FREIN COMBINÉ COMPACT

(30) Priorität: 27.03.2007 DE 102007015213
(43) Veröffentlichungstag der Anmeldung: 16.12.2009
(73) Patentinhaber: KNORR-BREMSE Systeme für Nutzfahrzeuge GmbH, 80809 München (DE)
(72) Erfinder: IRASCHKO, Johann, 85301 Schweitenkirchen (DE)
(74) Vertreter: Mattusch, Gundula
(86) Internationale Anmeldenummer: PCT/EP2008/002129
(87) Internationale Veröffentlichungsnummer: WO 2008/116571

(56) Entgegenhaltungen:
- DE-A1- 19 933 165
- DE-A1-102005 044 708

## Beschreibung

Die Erfindung betrifft einen Bremszylinder für pneumatisch betätigte Fahrzeugbremsen, insbesondere für Nutzfahrzeuge, nach dem Oberbegriff des Anspruchs 1.

Die Feststellbremse wird bei schweren Nutzfahrzeugen mittels so genannter Federspeicherzylinder betätigt. Die Bremsbetätigungskraft wird hierbei über eine gespannte Feder erzeugt, so dass den Anforderungen an eine mechanisch wirkende Feststellbremse genüge getan ist.

Da die Federspeicherzylinder in der Regel dazu ausgelegt sind, sehr hohe Kräfte zu erzeugen, ist ein manuelles Lösen im Betriebsfall nicht mehr sinnvoll. Das Lösen der Feststellbremse geschieht daher bei pneumatisch betätigten Bremsen mittels Druckluft.

Um dies zu ermöglichen, sind Federspeicherzylinder in der Regel mit einem Lösekolben ausgerüstet. Mit diesem Kolben ist es möglich, bei einer Einleitung von Druckluft die Feder soweit zusammen zu drücken, bis die Bremse gelöst ist. Damit die Feststellbremse während der Fahrt nicht eingelegt ist, wird der Kolben ständig mit Druckluft beaufschlagt, so dass sich die Feder nicht entspannen kann und somit die Feststellbremse nicht zur Wirkung kommt.

Die üblichste Bauform ist der so genannte Kombizylinder. Ein Kombizylinder besteht aus bzw. kombiniert zwei verschiedene Bremszylinderarten, nämlich einem Federspeicherzylinder für die Feststellbremsanlage (FBA) und einem Druckluftzylinder (meist einen Membranzylinder) für die Betriebsbremsanlage (BBA).

Üblicherweise sind die beiden Zylinder hintereinander, in axialer Richtung angeordnet. Hinter dem Membranteil des Kombizylinders ist der Federspeicherteil angeordnet, welcher mit seiner Kolbenstange auf den Kolbenteller des Membranzylinders und von diesem auf den Bremshebel wirkt.

Diese Bauform benötigt relativ viel Bauraum. Durch die Einführung aufwendigerer Fahrwerkssysteme, wie z.B. Einzelradaufhängungen, Leichtbauachsen etc wird der Bauraum jedoch zunehmend limitiert.

Es gibt daher Bestrebungen, durch andere Bauformen und Wirkungsweisen den Platzbedarf für den Feststellbremszylinder zu minimieren.

Eine kompaktere Bauform bietet insofern der so genannte Kompaktkombibremszylinder. Einen derartigen Bremszylinder offenbart die DE 10 2005 044 708 A1. Nach dieser Erfindung wird die Funktion des Feststellbremszylinders direkt in den Betriebsbremszylinder integriert. Die Federspeicherfeder wird hierbei nicht mehr über einen separaten Federspeicherkolben betätigt sondern ebenfalls über den Kolben des Betriebsbremszylinders.

Um die Feststellbremse zu lösen, wird für eine kurze Zeitspanne der BBA-Kolben mittels einer speziellen Ansteuerung mit Druckluft beaufschlagt. Da die dabei entstehende Kolbenkraft größer ist als die maximale Druckkraft der Speicherfeder wird diese zusammengedrückt. Zur Arretierung der Feder ist ein pneumatisch betätigter Sperrmechanismus erforderlich.

Dieser Mechanismus kann auf unterschiedliche Weise dargestellt werden. Eine Möglichkeit besteht darin, die Federspeicherfeder über eine nicht selbst hemmende Gewindespindel zu arretieren. Hierzu ist es erforderlich, die Gewindespindel durch den pneumatisch schaltbaren Sperrmechanismus zu arretieren.

Die Erfindung hat die Aufgabe, den gattungsgemäßen Bremszylinder mit einem kompakt bauenden, zuverlässig arbeitenden pneumatisch betätigbaren Sperrmechanismus zu versehen.

Die Erfindung löst diese Aufgabe durch den Gegenstand des Anspruchs 1.

Vorteilhafte Ausgestaltungen der Erfindung sind den Unteransprüchen zu entnehmen.

Die Erfindung nutzt den folgenden Effekt. Beim Zusammendrücken der Speicherfeder durch den Zylinderkolben ist es erforderlich, dass die Gewindespindel sich drehen kann. Die Gewindespindel darf also in dieser Phase nicht durch den Sperrmechanismus blockiert sein.

Hierzu ist ein bestimmter Funktionsablauf beim Lösen der Federspeicherbremse notwendig. Der Zylinder wird dabei so gesteuert, dass beim Komprimieren der Speicherfeder der Sperrmechanismus nicht mit Druckluft beaufschlagt ist. Erst wenn die Speicherfeder auf das definierte Maß zusammen gedrückt ist, wird der Sperrmechanismus aktiviert.

Allerdings kann dieser Funktionsablauf mit einer externen Steuerung nicht unter allen Betriebsbedingungen garantiert werden kann. Erfindungsgemäß ist es daher möglich, die Speicherfeder auch bei aktiviertem Sperrmechanismus durch den Zylinderkolben zu komprimieren

Da die Kraft der Feder unabhängig von-der Bewegungsrichtung stets in die gleiche Richtung wirkt, ist es ausreichend, wenn der Sperrmechanismus nur in Expansionsrichtung der Feder wirksam ist.

Durch die Integration einer richtungsabhängigen Kupplung kann die Gewindespindel bei aktiviertem Sperrmechanismus nur in einer Richtung verdreht werden. Der Freilauf bzw. die Ratschenkupplung muss dabei so orientiert werden, dass die Sperrwirkung in Expansionsrichtung der Speicherfeder wirkt.

Für die Funktion des Kompaktkombizylinders ist eine sichere Arretierung der Federspeicherfeder wichtig. Insbesondere sollte es durch Rüttelbelastungen und Vibrationen zu keiner Beeinträchtigung der Spindelarretierung kommen. Daher scheint für diese Anwendung eine auf Formschluss basierende Richtungskupplung das geeignete System zu sein.

Nach einer besonders vorteilhaften Variante wird die Erfindung in kompakter und einfach bauender Weise durch einen Ratschenmechanismus realisiert, der in den Sperrmechanismuskolben integriert wurde.

Nachfolgend wird die Erfindung unter Bezug auf die Zeichnung anhand eines Ausfiihrungsbeispiels näher erläutert. Es zeigen:
- Figur 1: einen Bremszylinder im Halbschnitt, links in der Lösestellung und rechts in der Feststellbremsstellung; zur beispielhaften Veranschaulichung der Funktion eines Kompaktkombibremszylinders;
- Fig. 2: eine Detailansicht aus Fig. 1;
- Fig. 3 bis 6: eine teilgebrochene Darstellung von Elementen einer manuell betätigba- ren Lösevorrichtung des Kompaktbremszylinders aus Fig. 1 und 2 in ver- schiedenen Betriebszuständen;
- Figur 7: einen erfindungsgemäßen Bremszylinder im Halbschnitt, links in der Lösestellung;
- Figur 8: eine Detailansicht von Bauteilen des Bremszylinders aus Fig. 7 in ver- schiedenen Funktionszuständen; und
- Fig. 9-13: verschiedene Ansichten von Baugruppen oder Abschnitten weiterer er- findungsgemäßer Bremszylinder.

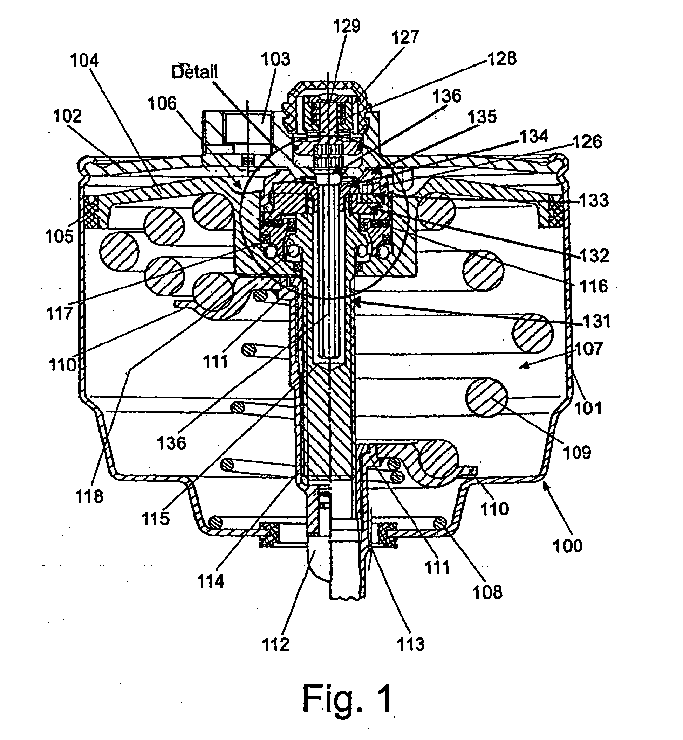

Fig. 1 zeigt einen Schnitt durch einen erfindungsgemäßen Kompaktbremszylinder 100, wobei in der linken Hälfte der Zeichnung der Federspeicher in gelöster Stellung und in der rechten Hälfte der Zeichnung der Federspeicher in eingelegter Stellung dargestellt ist.

Der in den Figuren 1 bis 3 dargestellte Bremszylinder 100 weist ein topfförmiges - vorzugsweise im Wesentlichen zylindrisches - Gehäuse 101 auf.

Das Gehäuse 101 ist an einem seiner Enden von einem Deckel 102 verschlossen, der mit wenigstens einem oder mehreren Druckluftanschlüssen 103 versehen ist.

In dem topfförmigen Gehäuse 101 ist ein Kolben 104 mit einem Kolbendichtring 105 angeordnet, dessen Durchmesser samt dem Kolbendichtring 105 dem Innendurchmesser des Gehäuses 101 entspricht.

Der Kolben 104 kann durch den Druckluftanschluss 103 mit Druckluft beaufschlagt werden, die auch durch diesen Anschluss ausströmen kann.

Wie Fig. 1 zeigt, ist der Kolben 104 im mittleren Bereich abgesenkt, so dass ein Druckraum 106 entsteht.

Durch den Kolben 104 wird noch ein weiterer Raum 107 begrenzt, in den eine kegelige Rückholfeder 108 und eine Federspeicherfeder 109 eingesetzt ist.

Die Federspeicherfeder 109 ist zwischen den Kolben 104 und einen Federspeicherkolben 110 gesetzt, dessen Durchmesser kleiner ist als der Innendurchmesser des Gehäuses.

Die Rückholfeder 108 ist zwischen die von der Federspeicher abgewandte Seite des Federspeicherkolbens 110 und den vom Deckel abgewandte inneren Endbereich des Gehäuses 101 gesetzt.

Der Federspeicherkolben 110 liegt an seinem Innenumfang auf einem Kragen 111 einer Kolbenstange 112, die eine im Gehäuse 101 auf dessen vom Deckel 102 abgewandten Ende ausgebildete Öffnung 113 durchsetzt und zur Betätigung einer Zuspannvorrichtung einer Bremse dient.

Ein pneumatisch betätigbarer Sperrmechanismus 116 ist in einem mittigen Aufnahmeraum 117 des Kolben 104 an dessen zum Deckel 102 gewandten Seite des Kolbens 104 untergebracht, welcher den Sperrmechanismus aufnimmt.

Die Kolbenstange 112 ist hülsenförmig gestaltet und mit einem Innengewinde versehen, in dass eine mit Außengewinde versehene Gewindespindel 114 eingreift. Die Gewindespindel 114 ist nicht selbsthemmend ausgelegt. Sie ist vorzugsweise an einem ihrer Enden direkt oder über Zwischenelemente mit dem pneumatisch betätigbaren Sperrmechanismus gekoppelt, der hier in Form einer pneumatisch betätigbaren Kupplung oder Bremse ausgebildet ist. Im dargestellten Ausführungsbeispiel ist dieser Sperrmechanismus als formschlüssige Kupplung 116 ausgebildet.

Die Kupplung 116 ist hier in vorteilhafter und kompakt bauender Weise zwischen den Axialflächen einer noch zu erläuternden Lagerscheibe 132, die mit der Gewindespindel drehfest gekoppelt ist, und einem Sperrmechanismuskolben 121 ausgebildet.

Der Sperrmechanismuskolben 121 ist an seinem Innen- und seinem Außenumfang mittels Kolbenringdichtungen 122, 123 gegen die Gewindespindel 114 und den Aufnahmeraum 117 abgedichtet.

Der Sperrmechanismuskolben 121 ist über einen Druckraum 124 über eine Druckluftleitung (hier nicht dargestellter Weise) mit Druckluft beaufschlagbar, wodurch die Kupplung 116 in Eingriff gebracht werden kann. Die Gewindespindel 114 ist entsprechend durch Druckluftbeaufschlagung des Druckraums 124 unterhalb des Sperrmechanismuskolbens 121 an Drehungen gehindert, so dass die FBA-Bremse außer Funktion setzbar ist.

Die Gewindespindel 114 ist über Wälzkörper 118 am Kolben 104 abgestützt.

In der linksseitigen Stellung der Fig. 1 ist die Kupplung 116 geschlossen bzw. die pneumatisch betätigbare Sperrvorrichtung aktiviert, so dass die Gewindespindel 114 gegen Drehungen gesichert ist.

Soll nun der Federspeicherkolben 110 in die in der rechtsseitigen Darstellung der Fig. 1 dargestellte Feststellbremsstellung überführt werden, wird die von dem Sperrmechanismuskolben 121 in die Kupplung 116 geleitete Kraft durch Druckabsenkung im Raum 124 verringert, so dass die von der Federspeicherfeder 109 aufgebrachte Kraft bewirkt, dass sich die Gewindespindel 114 dreht, wobei der Federspeicherkolben 110 mit der Kolbenstange 112 in der Bremsposition verschoben wird.

Die Drehzahl ist durch die Bremskraft der Kupplung 116 regelbar, so dass auch die lineare Bewegung des Federspeicherkolbens 110 gesteuert werden kann.

Zum Lösen der Bremsstellung wird entsprechend der vorherigen Ausführung der Druckraum 106 mit Druck beaufschlagt. Da der Feststellbremskolben 121 jetzt drucklos ist, kann sich die Gewindespindel 114 verdrehen und der Federspeicherkolben 110 wird entgegen der Wirkung der Federspeicherfeder 109 in die Ausgangsstellung zurückgefahren.

Bei Betriebsbremsungen bleibt die Kupplung 116 in Bremsstellung, so dass die beiden Kolben 104, 110 gemeinsam in die Bremsstellung bewegt werden, ohne ihre relative Stellung zueinander zu verändern. Die Wirkung der Federspeicherfeder 109 kann sich in diesem Zustand nicht entfalten. Analoges gilt für das Lösen der Bremse nach Betriebsbremsungen.

Bei dem Kompaktkombizylinder 100 ist die Funktion des Feststellbremszylinders in den Betriebsbremszylinder integriert. Die Federspeicherfeder 109 wird hierbei nicht mehr über einen separaten Federspeicherkolben betätigt sondern über den Kolben 104 des Betriebsbremszylinders. Um die Feststellbremse zu lösen, wird für eine kurze Zeitspanne der BBA-Kolben mittels einer speziellen Ansteuerung mit Druckluft beaufschlagt.

Wie vorstehend beschrieben, erfolgt das Lösen der Feststellbremse bzw. des Feststellbremsabschnittes im Regelfall mit Hilfe von Druckluft.

Daneben ist es erfindungsgemäß aber auch möglich, den Feststellbremsabschnitt bei einem Druckverlust manuell mit einer manuell betätigbaren Lösevorrichtung zu lösen.

Bei konventionellen Kombizylindern wird dazu die Feder mit Hilfe einer Gewindespindel (der so genannten Lösespindel) zurückgezogen. Die Funktion des Betriebsbremszylinders ist dadurch nicht beeinträchtigt.

Beim Kompaktkombizylinder kann dies nicht auf so einfache Weise dargestellt werden, da der BBA-Kolben und die Federspeicherfeder mit einander verbunden sind. Würde man die Federspeicherfeder 109 durch eine von außen zugängliche Gewindespindel zurückziehen, wäre auch der BBA-Kolben blockiert und folglich auch die Funktion des BBA-Zylinders nicht mehr gegeben.

Zum manuellen Lösen der Federspeicherfeder ist ein daher eine manuell betätigbare Lösevorrichtung vorteilhaft, die es ermöglicht, die Federspeicherwirkung bei Druckverlust ohne Beeinträchtigung der BBA-Funktion aufzuheben. Ferner soll es möglich sein, nach dem Lösevorgang die FBA-Wirkung durch einen manuellen Vorgang wieder herzustellen. Dies wird dadurch erreich, dass der manuell betätigbaren Lösevorrichtung eine ebenfalls manuell betätigbare Sperrvorrichtung zugeordnet ist. Die im Anschluss dargestellte und näher beschriebene Sperrvorrichtung basiert auf einem Ratschenmechanismus.

Der Ratschenmechanismus weist eine Lagerscheibe 132 auf, die mit der Gewindespindel 114 drehfest gekoppelt oder einstückig mit dieser ausgebildet ist. Sie ist mit Wälzkörpern 125 an einer Topfscheibe 135 abgestützt und je nach Funktionsstellung der Sperrvorrichtung, die zwischen diesen beiden Elementen 132, 135 wirkt, relativ zu dieser drehbar. Diese Lagerscheibe 132 weist eine Ausnehmung 119 für eine Sperrklinke 133 auf und einen Stift 137, der zur Drehmomentübertragung dient. Die Sperrklinke 133 ist drehbar in die Lagerscheibe 132 eingesetzt, durch einen angeformten Bolzen 120 mit der Steuerscheibe 134 verbunden und wird durch eine Blattfeder 138 radial nach außen gedrückt.

Der Ratschenmechanismus umfasst ferner eine Steuerscheibe 134 mit einer Steuerkontur 139, einem bogenförmigen Langloch 140 und einem mittig angeordneten sechskantförmigen Durchbruch.

Die Steuerkontur 139 dient zur Ein- und Ausschaltung der Sperrklinke 133. Das bogenförmige Langloch 140 dient dagegen ab einem bestimmten Winkelweg zur Übertragung des Drehmoments auf die Lagerscheibe 132. Der Innensechskant dient zur Einleitung des Drehmoments in die Steuerscheibe 134.

Ein profilierter Betätigungsdorn 136 dient zur Einleitung des manuell aufgebrachten Drehmoments.

Ferner dient er zur Ein- und Ausschaltung des Mechanismus. Der Betätigungsdorn 136 ist im Gehäuse 101 des Bremszylinders dreh und schwenkbar gelagert.

Der Ratschenmechanismus umfasst ferner die Topfscheibe 135 mit Innenverzahnung, welche mit der Sperrklinke 133 mit entsprechender Verzahnung beim manuellen Lösevorgang im Eingriff ist. Die Topfscheibe 135 stützt sich am Kolben 104 ab und ist relativ zu diesem nicht verdrehbar.

Da es sich um einen formschlüssigen Ratschenmechanismus handelt, ist eine sichere und schlupffreie Arretierung der Federspeicherfeder gewährleistet.

Die Funktion dieser Anordnung ist wie folgt

Beim manuellen Lösen der Federspeicherfeder 109 muss die Gewindespindel 114 mit Hilfe eines Schraubenschlüssels zurückgedreht werden.

Das Drehmoment wird dabei über den Betätigungsdorn 136 in die Steuerscheibe 134 übertragen. Durch das Verdrehen der Steuerscheibe 134 relativ zur Lagerscheibe 132 wird die Sperrklinke 133 durch die Steuerkontur 139 zum Eingriff in die Verzahnung der Topfscheibe 135 freigegeben. Die Sperrklinke 133 wird dabei durch die Blattfeder 138 elastisch gegen die Innenverzahnung der drehfesten Topfscheibe 135 gedrückt. Gleichzeitig wird nach der Überdrehung des Steuerwinkels über das bogenförmige Langloch 140 und einem entsprechenden Stift 137 in der Lagerscheibe 132 das Drehmoment von der Steuerscheibe 134 in die Lagerscheibe 132 und von dort in die Gewindespindel 114 übertragen.

Da die Sperrklinke 133 aufgrund der richtungsabhängigen Sperrwirkung ein selbsttätiges Zurückdrehen der Gewindespindel 114 verhindert, kann der Schraubenschlüssel ohne Aufdrehen der Gewindespindel 114 umgesetzt werden.

Dieser Vorgang kann solange wiederholt werden, bis die Federspeicherfeder die Lösestellung für die Feststellbremse erreicht hat.

Wenn die Federspeicherfeder von der Position "Federspeicher gelöst" manuell in die Position "Federspeicher eingelegt" gebracht werden soll, muss mit dem Schraubenschlüssel eine Drehbewegung in Sperrrichtung des Ratschenmechanismus ausgeführt werden. Dabei wird zunächst die Steuerscheibe 134 relativ zur Lagerscheibe 132 so weit verdreht, bis die Sperrklinke 133 durch die Steuerkontur 139 aus der Innenverzahnung der Topscheibe 135 gezogen wird. Sobald dieser Zustand erreicht wird, kann sich die Gewindespindel 114 verdrehen.

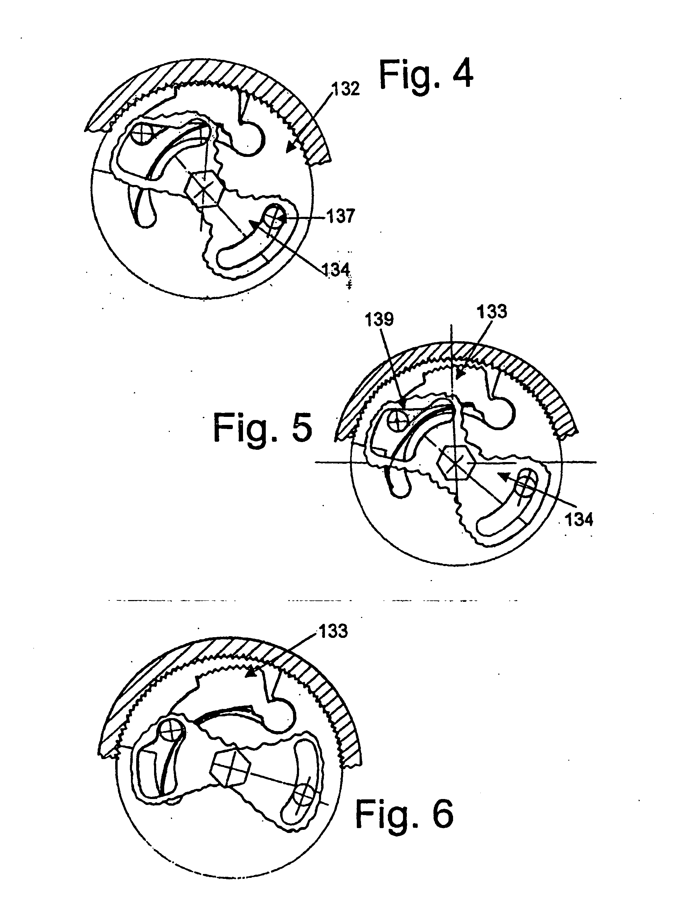

Fig. 5 zeigt ein derartiges manuelles Zustellen der Federspeicherbremse. Die Steuerscheibe 134 wird in dieser Figur nach links verdreht, wodurch die Sperrklinke 133 über die Kontur 139 aus der Verzahnung gezogen wird. Die Lagerscheibe 132 kann sich hierdurch bis zur nächsten Einrastung der Sperrklinke 133 drehen.

Da sich die Gewindespindel 114 schneller bewegt als die vom Schraubenschlüssel geführte Steuerscheibe 134 kommt es zu einer Relativbewegung zwischen Lagerscheibe 132 und Steuerscheibe 134 und folglich wieder zum Einrasten der Sperrklinke 133 in der Innenverzahnung der drehfesten Topfscheibe 135. Damit wird gewährleistet, dass sich die Gewindespindel 114 nur so weit und so schnell dreht, wie von der Drehbewegung des Schraubenschlüssels vorgegeben wird.

Hierzu ist es notwendig den Betätigungsdorn 136 mit Hilfe eines Schraubenschlüssels in Richtung "Federspeicherbremse einlegen" zu drehen bis eine weitere Drehung nicht mehr möglich ist. Dadurch wird erreicht, dass die Steuerscheibe 134 relativ zur Lagerscheibe 132 verdreht wird und der Schaltpin der Sperrklinke 133 in eine Einraststellung auf der Steuerkontur 139 gebracht wird.

In Fig. 6 ist die manuelle Lösevorrichtung in ihrer deaktivierten Stellung dargestellt. Die Sperrklinke 133 verharrt in ihrer Ruheposition.

Fig. 4 zeigt die Sperrstellung des Freilaufs. Die Lagerscheibe 132 wird durch die Steuerscheibe 134 über den Pin 137 nach rechts gedreht. Die Lagerscheibe 132 kann sich in dieser Stellung nicht selbsttätig nach links drehen.
Fig. 4 zeigt die Sperrstellung des Freilaufs. Die Lagerscheibe 132 wird durch die Steuerscheibe 134 über den Pin 137 nach rechts gedreht. Die Lagerscheibe 132 kann sich in dieser Stellung nicht selbsttätig nach links drehen.

Wie vorstehend beschrieben, wird beim manuellen Lösevorgang der Federspeicherbremse mit Hilfe des so genannten Betätigungsdoms 136 und des Ratschenmechanismus 126 die Gewindespindel 114 zum Zurückziehen der Speicherfeder 109 mit einem Schraubenschlüssel verdreht.

Der Betätigungsdorn 136 steht beim manuellen Lösevorgang in Kontakt mit der manuellen Drehvorrichtung 127 zum Ansetzen eines Betätigungswerkzeuges, insbesondere eines Schraubenschlüssels. Die Drehvorrichtung 127 ist so gestaltet, dass z.B. beim Zurückdrehen, sprich Lösen des Federspeichers eine äußere Buchse 128 durch eine spezielle Formgebung in axialer Richtung einen Weg (Hub) ausführt, bis eine Drehmomenteinleitung möglich ist.

Durch diesen Axialhub ergibt sich zwischen der äußeren Buchse 128 und einem inneren Bolzen 129 stirnseitig eine Abstufung. Aufgrund dieser eindeutigen Konturänderung kann der manuelle Lösezustand der Federspeicherbremse visuell erkannt bzw. ertastet werden.

Die vorstehenden Figuren dienten der Veranschaulichung des Funktionsprinzips eines neuartigen Kompaktbremszylinders, der in den nachfolgenden Figuren mit erfindungsgemäß ausgestalteten pneumatisch betätigbaren Sperrmechanismen versehen wird.

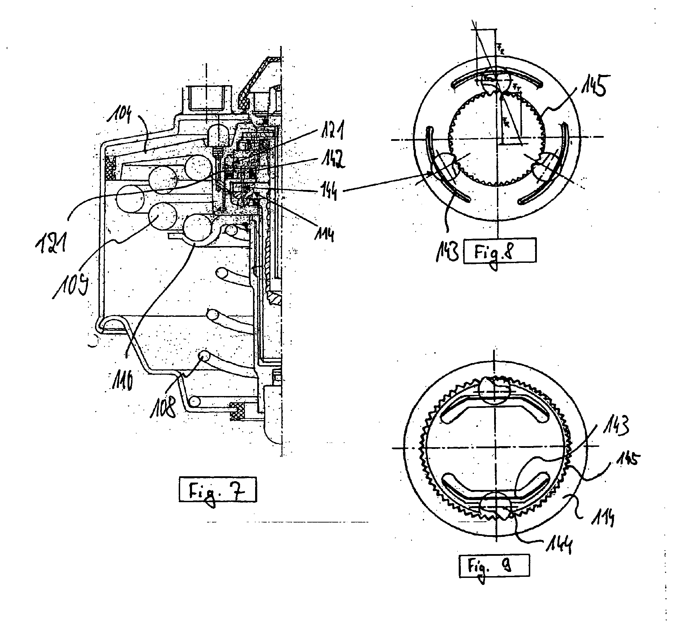

In den Fig. 7 bis 12 sind verschiedene Ausführungsformen für die Anwendung im Kompaktkombizylinder dargestellt.

Fig. 7 zeigt im Halbschnitt eine Ausführungsform des Kompaktkombizylinders mit einem integrierten Ratschenmechanismus 142 im Sperrmechanismuskolben 121.

Der Sperrmechanismuskolben 121 ist im umgebenden Kolben 104 verschieblich aber jedenfalls in einer Betriebsstellung nicht relativ zu diesem in Umfangsrichtung verdrehbar angeordnet.

Wie in Fig. 8 zu erkennen ist, sind in den Kolben drei von einer Feder 143 hier radial nach innen hin federbelastete Sperrelemente 144 eingesetzt, die eine Verzahnung aufweisen..

Diese Sperrelemente 144 greifen in eine korrespondierende Verzahnung 145 hier auf dem Außenumfang der Gewindespindel 114.

Da der Sperrmechanismuskolben 121 bei Druckluftbeaufschlagung in eine kolbenseitige Verzahnung 146 des Kolbens 104 (im Aufnahmeraum 117) gedrückt wird, ist eine Verdrehung des Sperrmechanismuskolbens 121 nicht möglich. Die Gewindespindel 114 kann sich somit nur in der Löserichtung des Ratschenmechanismus drehen. Eine sichere Fixierung der Speicherfeder ist somit also gewährleistet.

Weitere Ausführungsformen zeigen die Fig. 9 bis 12.

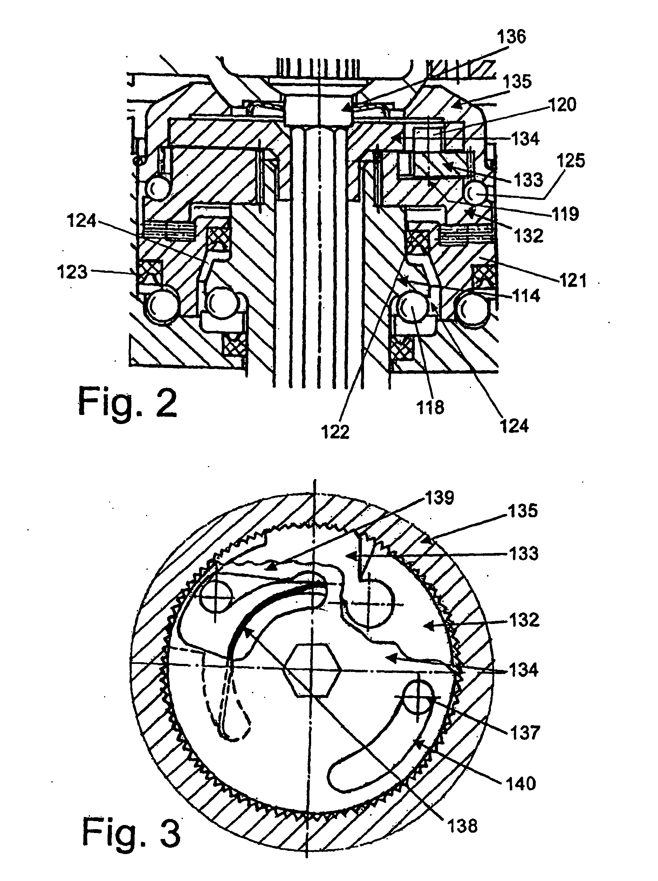

Während in Figur 2 ein Ratschenmechanismus mit Außenverzahnung und radial nach innen wirkenden Sperrelementen 144 gezeigt wird, ist in Fig. 9 ein umgekehrtes System dargestellt, d.h., die Feder 143 drückt die Sperrelemente hier radial nach außen in eine Verzahnung am Innenumfang eines Ringabschnittes der Gewindespindel 114 oder des Sperrmechanismuskolbens 121.

Bei dieser Ausführung sind die Kräfte, die auf die Sperrelemente 144 wirken geringer da der Wirkdurchmesser im Vergleich größer ist. Die Sperrelemente 144 können daher in der Anzahl reduziert oder kleiner dimensioniert werden. In beiden Ausführungen dienen vorzugsweise Blattfedern 143 zum Andrücken der Sperrelemente 144.

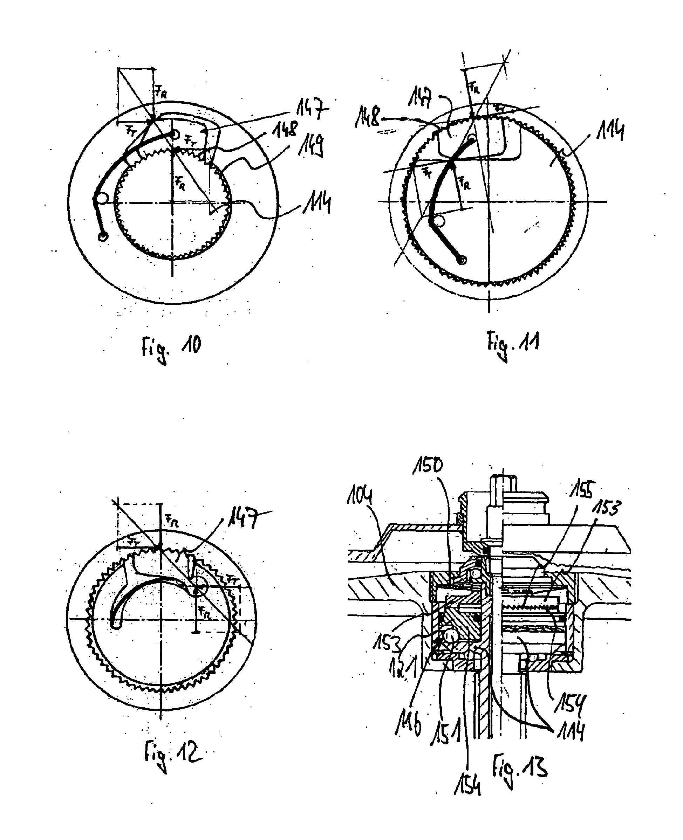

Fig. 10 zeigt einen Ratschenmechanismus mit exzentrisch wirkender Kraft. Eine Sperrklinke 147 greift mit mehreren Zähnen 148 in ein Gegenprofil 149 der Gewindespindel 114 ein. Die Kraft am Einzelzahn wird dadurch reduziert und es wird somit eine höhere Belastbarkeit erreicht.

Durch die schräg verlaufende Abstützfläche wird die Sperrklinke 147 in das Verzahnungsprofil 149 gedrückt. Eine sichere Sperrwirkung ist damit gegeben. Die Sperrklinke 147 ist mit einer Formfeder 148 vorgespannt, ein schnelles und sicheres Ansprechen ist damit sichergestellt.

Fig. 11 zeigt das umgekehrte System. Die Belastung auf die Sperrklinke 147 ist wegen des größeren Wirkdurchmessers geringer.

Fig. 12 zeigt ein System mit schwenkbarer Sperrklinke 147. In der Sperrrichtung wird die Sperrklinke 147 durch die Umgangskraft in die korrespondierende Verzahnung 149 der Gewindespindel 114 gedrückt Hier ist es wichtig, dass der Abstand des Drehpunkts zur Krafteinleitungslinie in radialer Richtung möglichst groß ist um eine sichere Klemmwirkung zu erreichen.

In Fig. 13 ist ein in axialer Richtung wirkendes Kupplungssystem dargestellt. Die Vorspannung des Kolbens 121 erfolgt in diesem Beispiel mit einer Tellerfeder 150. Mit dieser Feder 150 wird gleichzeitig auch noch die Übertragung des Drehmoments vom Kolben 121 zum Kolben 104 durchgeführt.

Als Kupplung 116 wird eine Konuskupplung 151 mit Kugeln 152 eingesetzt.

Der Sperrmechanismuskolben ist geteilt ausgebildet und weist zwei Abschnitte 153 und 154 auf, die über eine gerichtete Sägerverzahnung 155 mit in einer Umfangsrichtung deutlich steilere Flanken axial ineinander greifen.

Die Richtwirkung wird durch die Sägezahnform der Verzahnung 155 zwischen den Abschnitten 153 und 154 des Sperrmechanismuskolbens 121 erreicht.

Bei dieser Ausführung befinden sich alle Zähne gleichzeitig im Eingriff, die Belastung für die Verzahnung ist daher relativ gering.

### Bezugszeichenliste

- Kompaktbremszylinder: 100
- Gehäuse: 101
- Deckel: 102
- Druckluftanschlüsse: 103
- Kolben: 104
- Umfangsdichtring: 105
- Druckraum: 106
- Raum: 107
- Rückholfeder: 108
- Federspeicherfeder: 109
- Federspeicherkolben: 110
- Kragen: 111
- Kolbenstange: 112
- Öffnung: 113
- Gewindespindel: 114
- Sperrmechanismus: 116
- Aufnahmeraum: 117
- Wälzkörper: 118
- Ausnehmung: 119
- Bolzen: 120
- Sperrmechanismuskolben: 121
- Kolbendichtungen: 122, 123
- Druckraum: 124
- Wälzkörper: 125
- Ratschenmechanismus: 126
- Drehvorrichtung: 127
- Buchse: 128
- Bolzen: 129
- Lagerscheibe: 132
- Sperrklinke: 133
- Steuerscheibe: 134
- Topfscheibe: 135
- Betätigungsdorn: 136
- Stift: 137
- Blattfeder: 138
- Steuerkontur: 139
- Langloch: 140
- Ratschenmechanismus: 142
- Feder: 143
- Sperrelemente: 144
- Verzahnung: 145
- Verzahnung: 146
- Sperrklinke: 147
- Zähne: 148
- Gegenprofil: 149
- Formfeder: 141
- Tellerfeder: 150
- Konuskupplung: 151
- Kugeln: 152
- Abschnitte: 153 und 154
- Sägerverzahnung: 155

## Patentansprüche

1. Bremszylinder für pneumatisch betätigte Fahrzeugbremsen, insbesondere für Nutzfahrzeuge, mit
a. einem Federspeicherbremsabschnitt zur Durchführung von Feststellbremsvorgängen mittels einer Federspeicherfeder (109), und einem Betriebsbremsabschnitt zur Durchführung druckluftbetätigter Betriebsbremsungen, wobei der Federspeicherbremsabschnitt und der Betriebsbremsabschnitt zu einer baulichen Einheit in einem Gehäuse (101) zusammengefasst sind,
b. wobei das Gehäuse (101) von einem Kolben (104) in zwei Räume (106, 107) unterteilt ist, von denen der eine der beiden Räume (106) als Druckraum zum Betätigen des Betriebsbremsabschnittes dient, und wobei die Federspeicherfeder (109) des Federspeicherabschnittes in dem weiteren Raum (107) auf der gegenüberliegenden Seite des Kolbens (104) angeordnet ist,
c. wobei die Federspeicherfeder (109) auf einen weiteren Federspeicherkolben (110) im Raum (107) wirkt, der mittels eines pneumatisch betätigbaren Sperrmechanismus (116) gegenüber dem Kolben (104) arretierbar und durch Lösen des Sperrmechanismus von diesem lösbar ist, und der direkt oder über weitere Elemente mit einer Kolbenstange (112) zum Betätigen der Fahrzeugbremse verbunden ist,
d. wobei nach dem Lösen des Sperrmechanismus die Federspeicherfeder (109) zwischen den beiden Kolben (104, 110) wirkt und diese bei einer Feststellbremsung relativ zueinander verschiebt,
**dadurch gekennzeichnet, dass**
e. der pneumatisch betätigbare Sperrmechanismus derart ausgelegt ist, dass er lediglich in Expansionsrichtung der Feder wirksam ist.

2. Bremszylinder nach Anspruch 1, **dadurch gekennzeichnet, dass** der pneumatisch betätigbare Sperrmechanismus einen richtungsabhängigen Freilauf bzw. eine richtungsabhängige Kupplung aufweist.

3. Bremszylinder nach Anspruch 2, **dadurch gekennzeichnet, dass** die richtungsabhängige Kupplung als auf Formschluss basierende Richtungskupplung ausgelegt ist.

4. Bremszylinder nach Anspruch 3, **dadurch gekennzeichnet, dass** die richtungsabhängige Kupplung als Ratschenkupplung ausgelegt ist.

5. Bremszylinder nach Anspruch 4, **dadurch gekennzeichnet, dass** der Freilauf der Freilauf bzw. die Ratschenkupplung so orientiert ist, dass die Sperrwirkung in Expansionsrichtung der Speicherfeder wirkt.

6. Bremszylinder nach einem der vorstehenden Ansprüche, **dadurch gekennzeichnet, dass** der durch die Federspeicherfeder (109) belastete Federspeicherkolben (110) mit einer Gewindespindel (114) in Eingriff steht, die mit der Kupplung (116) als pneumatisch betätigbarer Sperrmechanismus in Wirkverbindung steht, so dass im Lösezustand des Bremszylinders die Spindel (114) gegen Drehung gesichert ist, und dass durch Verringerung oder Aufhebung des Eingriffs der Kupplung (116) die Gewindespindel (114) drehfähig ist, so dass durch die Entspannung der Federspeicherfeder (109) der Federspeicherkolben (110) in Längsrichtung der Gewindespindel (114) verfahrbar ist.

7. Bremszylinder nach einem der vorstehenden Ansprüche, **dadurch gekennzeichnet, dass** die Gewindespindel (114) nicht selbsthemmend ist, und dass die Reibkraft der Kupplung (116) mittels eines druckluftbeaufschlagbaren Sperrmechanismuskolbens (121) regelbar ist.

8. Bremszylinder nach Anspruch 7, **dadurch gekennzeichnet, dass** die Ratschenkupplung in den Sperrmechanismuskolben integriert ist.

9. Bremszylinder nach Anspruch 7, **dadurch gekennzeichnet, dass** der Sperrmechanismuskolben in einer Betriebsstellung im umgebenden Kolben (104) verschieblich aber relativ zu diesem in Umfangsrichtung unverdrehbar angeordnet ist.

10. Bremszylinder nach einem der vorstehenden Ansprüche, **dadurch gekennzeichnet, dass** in den Sperrmechanismuskolben (121) eines oder mehrere jeweils von einer Feder (143) federbelastete Sperrelement(e) (144) eingesetzt ist/sind, welche(s) eine Verzahnung aufweist, die mit einer Verzahnung (145) der Gewindespindel (114) zusammenwirkt.

11. Bremszylinder nach einem der vorstehenden Ansprüche, **dadurch gekennzeichnet, dass** in den Sperrmechanismuskolben (121) mehrere, vorzugsweise drei, von der Feder (143) radial nach innen hin federbelastete Sperrelemente (144) eingesetzt sind.

12. Bremszylinder nach einem der vorstehenden Ansprüche, **dadurch gekennzeichnet, dass** die Sperrelemente (144) in eine korrespondierende Verzahnung (145) auf dem Außenumfang der Gewindespindel (114) eingreifen.

13. Bremszylinder nach einem der vorstehenden Ansprüche, **dadurch gekennzeichnet, dass** in den Sperrmechanismuskolben (121) mehrere, vorzugsweise drei, von der Feder (143) radial nach außen hin federbelastete Sperrelemente (144) eingesetzt sind.

14. Bremszylinder nach einem der vorstehenden Ansprüche, **dadurch gekennzeichnet, dass** die Sperrelemente (144) in eine korrespondierende Verzahnung (145) auf dem Innenumfang eines Ringabschnittes der Gewindespindel (114) eingreifen.

15. Bremszylinder nach einem der vorstehenden Ansprüche, **dadurch gekennzeichnet, dass** das wenigstens ein Sperrelement (144) als bewegliche, insbesondere verschwenkbare Sperrklinke (147) ausgebildet ist, die mit mehreren Zähnen 148 in ein Gegenprofil 149 der Gewindespindel 114 eingreift.

16. Bremszylinder nach einem der vorstehenden Ansprüche, **dadurch gekennzeichnet, dass** die Kupplung als in axialer Richtung wirkendes System ausgelegt ist.

17. Bremszylinder nach einem der vorstehenden Ansprüche, **dadurch gekennzeichnet, dass** die Kupplung eine den Kolben (121) relativ zum Kolben (104) vorspannende Tellerfeder (150) aufweist, welche auch die Übertragung des Drehmoments zum Kolben (104) bewirkt.

18. Bremszylinder nach einem der vorstehenden Ansprüche, **dadurch gekennzeichnet, dass** der Sperrmechanismuskolben (121) geteilt ausgebildet ist und zwei Abschnitte (153 und 154) aufweist, die vorzugsweise über eine gerichtete Sägerverzahnung (155) axial ineinander greifen.

## Claims

1. A brake cylinder for pneumatically actuated vehicle brakes, in particular for commercial vehicles, having
a. a spring force accumulator brake section for carrying out parking brake operations by means of a spring force accumulator spring (109), and a service brake section for carrying out service brake operations which are actuated by compressed air, the spring force accumulator brake section and the service brake section being combined in a housing (101) to form one structural unit,
b. the housing (101) being divided by a piston (104) into two spaces (106, 107), of which one of the two spaces (106) serves as pressure space for actuating the service brake section, and the spring force accumulator spring (109) of the spring force accumulator section being arranged in the further space (107) on the opposite side of the piston (104),
c. the spring force accumulator spring (109) acting in the space (107) on a further spring force accumulator piston (110) which can be locked with respect to the piston (104) by means of a pneumatically actuable locking mechanism (116) and can be released from the locking mechanism by release of the latter, and which is connected directly or via further elements to a piston rod (112) for actuating the vehicle brake,
d. after the release of the locking mechanism, the spring force accumulator spring (109) acting between the two pistons (104, 110) and displacing them relative to one another in the case of a parking brake operation,
**characterized in that**,
e. the pneumatically actuable locking mechanism is designed in such a way that it is effective merely in the expansion direction of the spring.

2. The brake cylinder as claimed in claim 1, **characterized in that** the pneumatically actuable locking mechanism has a direction-dependent freewheel or a direction-dependent clutch.

3. The brake cylinder as claimed in claim 2, **characterized in that** the direction-dependent clutch is designed as a directional clutch which is based on a positive locking action.

4. The brake cylinder as claimed in claim 3, **characterized in that** the direction-dependent clutch is designed as a ratchet coupling.

5. The brake cylinder as claimed in claim 4, **characterized in that** the freewheel or the ratchet coupling is oriented in such a way that the locking action acts in the expansion direction of the accumulator spring.

6. The brake cylinder as claimed in one of the preceding claims, **characterized in that** the spring force accumulator piston (110) which is loaded by the spring force accumulator spring (109) is in engagement with a threaded spindle (114) which is operatively connected to the clutch (116) as pneumatically actuable locking mechanism, with the result that the spindle (114) is secured against rotation in the release state of the brake cylinder, and that the threaded spindle (114) is capable of rotation as a result of reduction or cancelation of the engagement of the clutch (116), with the result that the spring force accumulator piston (110) can be moved in the longitudinal direction of the threaded spindle (114) as a result of the relief of the spring force accumulator spring (109).

7. The brake cylinder as claimed in one of the preceding claims, **characterized in that** the threaded spindle (114) is not self-locking, and **in that** the frictional force of the clutch (116) can be regulated by means of a locking mechanism piston (121) which can be loaded with compressed air.

8. The brake cylinder as claimed in claim 7, **characterized in that** the ratchet coupling is integrated into the locking mechanism piston.

9. The brake cylinder as claimed in claim 7, **characterized in that**, in an operating position, the locking mechanism piston is arranged displaceably in the surrounding piston (104) but such that it cannot be rotated relative to the latter in the circumferential direction.

10. The brake cylinder as claimed in one of the preceding claims, **characterized in that** one or more locking elements (144) which is/are spring-loaded in each case by a spring (143) is/are inserted into the locking mechanism piston (121) which locking element or locking elements (144) has/have a toothing system which interacts with a toothing system (145) of the threaded spindle (114).

11. The brake cylinder as claimed in one of the preceding claims, **characterized in that** a plurality of, preferably three, locking elements (144) which are spring-loaded radially toward the inside by the spring (143) are inserted into the locking mechanism piston (121).

12. The brake cylinder as claimed in one of the preceding claims, **characterized in that** the locking elements (144) engage into a corresponding toothing system (145) on the external circumference of the threaded spindle (114).

13. The brake cylinder as claimed in one of the preceding claims, **characterized in that** a plurality of, preferably three, locking elements (144) which are spring-loaded radially toward the outside by the spring (143) are inserted into the locking mechanism piston (121).

14. The brake cylinder as claimed in one of the preceding claims, **characterized in that** the locking elements (144) engage into a corresponding toothing system (145) on the internal circumference of an annular section of the threaded spindle (114).

15. The brake cylinder as claimed in one of the preceding claims, **characterized in that** the at least one locking element (144) is configured as a movable, in particular pivotable, locking pawl (147) which engages by way of a plurality of teeth (148) into a corresponding profile (149) of the threaded spindle (114).

16. The brake cylinder as claimed in one of the preceding claims, **characterized in that** the clutch is designed as a system which acts in the axial direction.

17. The brake cylinder as claimed in one of the preceding claims, **characterized in that** the clutch has a disk spring (150) which prestresses the piston (121) relative to the piston (104) and also brings about the transmission of the torque to the piston (104).

18. The brake cylinder as claimed in one of the preceding claims, **characterized in that** the locking mechanism piston (121) is of split configuration and has two sections (153 and 154) which preferably engage axially into one another via a directional saw toothing system (155).

## Revendications

1. Cylindre de frein pour des freins à commande pneumatique, en particulier pour des véhicules utilitaires, comprenant :
a) une partie de frein à accumulation pour la réalisation des opérations de serrage du frein de stationnement moyennant un ressort accumulateur (109) et une partie de frein de service pour la réalisation des opérations de serrage du frein de service, à ladite partie de frein à accumulation et à ladite partie de frein de service étant combiné de façon à constituer une unité modulaire dans un carter (101),
b) dans lequel ledit carter (101) est divisé en deux compartiments (106, 107) par un piston (104), dont le premier desdits deux compartiments (106) sert en tant qu'un espace sous pression pour la commande de ladite partie de frein de service, et dans lequel ledit ressort accumulateur (109) de ladite partie de frein à accumulation est disposé dans ledit autre compartiment (107) du côté opposé dudit piston (104),
c) dans lequel ledit ressort accumulateur (109) agit sur un autre piston d'accumulation à ressort (110) dans ledit compartiment (107), qui est arrêtable relativement audit piston (104) moyennant un mécanisme d'arrêt (116) et se peut détacher du dernier moyennant ledit mécanisme d'arrêt, et qui est raccordé directement ou via des autres éléments à une tige de piston (112) pour la commande du frein du véhicule,
d) dans lequel ledit ressort accumulateur (109) agit entre lesdits deux pistons (104, 110) et les déplace l'un relativement à l'autre au cas de l'opération du frein de stationnement,
**caractérisé en ce**
e) **que** ledit mécanisme d'arrêt opérable par voie pneumatique est conçu d'une telle manière, qu'il ne soit opératif qu'en direction de détente dudit ressort.

2. Cylindre de frein selon la revendication 1, **caractérisé en ce que** ledit mécanisme d'arrêt commandable par voie pneumatique comprend un mécanisme de course libre en fonction de la direction ou respectivement un coupleur dépendant de la direction.

3. Cylindre de frein selon la revendication 2, **caractérisé en ce que** ledit coupleur dépendant de la direction est conçu sous forme d'un coupleur à cliquet.

4. Cylindre de frein la revendication 3, **caractérisé en ce que** ledit piston à ressort accumulateur (110), qui est chargé par ledit ressort accumulateur (109), se trouve en prise dans une broche filetée (114), qui se trouve en connexion opérative avec ledit coupleur (116) en tant que mécanisme d'arrêt commandable par voie pneumatique, d'une telle façon, qu'en état de desserrage du cylindre de frein, ladite broche (114) soit arrêtée contre une rotation, et **en ce que** par réduction ou élimination de la prise dudit coupleur (116), ladite broche filetée (114) est capable de se tourner, d'une telle façon, que ledit piston à ressort accumulateur (110) soit mobile en sens longitudinal de ladite broche filetée (114) en vertu de la détente dudit ressort accumulateur (109).

5. Cylindre de frein selon la revendication 4, **caractérisé en ce que** ledit mécanisme de course libre ou respectivement ledit coupleur à cliquet est orienté en un tel sens que l'effet d'arrêt soit opératif en sens de détente dudit ressort accumulateur.

6. Cylindre de frein selon une quelconque des revendications précédentes, **caractérisé en ce que** ledit piston à ressort accumulateur (110), qui est chargé par ledit ressort accumulateur (109), se trouve en prise dans une tige filetée (114) en connexion opérative avec ledit coupleur (116) en tant que mécanisme commandable par voie pneumatique, d'une telle façon, qu'en état de desserrage du cylindre de frein, ladite broche filetée est arrêtée contre une rotation, et **en ce que** par réduction ou élimination de la prise dudit coupleur (116), ladite broche filetée (114) est capable de se tourner, d'une telle façon, que ledit piston à ressort accumulateur (110) soit mobile en sens longitudinal de ladite broche filetée (114) en vertu de la détente dudit ressort accumulateur (109).

7. Cylindre de frein selon une quelconque des revendications précédentes, **caractérisé en ce que** ladite broche filetée (114) n'est pas autobloquante, et **en ce que** l'effort de friction dudit coupleur (116) est réglable moyennant un piston (121) dudit mécanisme d'arrêt, qui est apte à être soumis à air comprimé.

8. Cylindre de frein selon la revendication 7, **caractérisé en ce que** ledit coupleur à cliquet est intégré dans ledit piston du mécanisme d'arrêt.

9. Cylindre de frein selon la revendication 7, **caractérisé en ce qu'**en une position de service, ledit piston du mécanisme d'arrêt est disposé de façon déplaçable dans le piston l'entourant (104), mais de façon non rotative en sens périphérique relativement au piston.

10. Cylindre de frein selon une quelconque des revendications précédentes, **caractérisé en ce qu'**un ou plusieurs élément(s) d'arrêt (144) est/sont logé dans ledit piston (121) du mécanisme d'arrêt, dont chacun est chargé par un ressort (143) respectif et qui comprend/comprennent une denture interagissant avec une denture (145) de ladite broche filetée (114).

11. Cylindre de frein selon une quelconque des revendications précédentes, **caractérisé en ce que** plusieurs, de préférence trois, éléments d'arrêt (144) sont logés dans ledit piston (121) du mécanisme d'arrêt, qui sont chargé par ledit ressort (143) en sens radial vers l'intérieur.

12. Cylindre de frein selon une quelconque des revendications précédentes, **caractérisé en ce que** lesdits éléments d'arrêt (144) se trouvent en prise dans une denture correspondante (145) à la périphérie extérieure de ladite broche filetée (114).

13. Cylindre de frein selon une quelconque des revendications précédentes, **caractérisé en ce que** plusieurs, de préférence trois, éléments d'arrêt (144) sont logés dans ledit piston (121) du mécanisme d'arrêt, qui sont chargé par ledit ressort en sens radial vers l'extérieur.

14. Cylindre de frein selon une quelconque des revendications précédentes, **caractérisé en ce que** lesdits éléments d'arrêt (144) se trouvent en prise dans une denture correspondante (145) à la périphérie intérieure d'une partie annulaire de ladite broche filetée (114).

15. Cylindre de frein selon une quelconque des revendications précédentes, **caractérisé en ce qu'**au moins un élément d'arrêt (144) est configuré sous forme d'un cliquet d'arrêt (147) mobile, en particulier pivotable, qui se trouve en prise par une pluralité de dents (148) dans un contre-profil (149) de ladite broche filetée (114).

16. Cylindre de frein selon une quelconque des revendications précédentes, **caractérisé en ce que** ledit coupleur est conçu sous forme d'un système opératif en sens axial.

17. Cylindre de frein selon une quelconque des revendications précédentes, **caractérisé en ce que** ledit coupleur comprend une rondelle ressort (150), qui met ledit piston (121) en précontrainte relativement audit piston (104) et qui induit aussi le transfert du couple vers ledit piston (104).

18. Cylindre de frein selon une quelconque des revendications précédentes, **caractérisé en ce que** ledit piston (121) du mécanisme d'arrêt (121) présente
une configuration divisée et comprend deux parties (153 et 154), qui se trouvent en prise axiale l'une dans l'autre, de préférence via une denture à dents de scie orientée.
